# EUROPÄISCHE PATENTSCHRIFT

(11) **EP 0 731 340 B1**
(45) Veröffentlichungstag und Bekanntmachung des Hinweises auf die Patenterteilung: **11.04.2001**
(21) Anmeldenummer: 96100728.3
(22) Anmeldetag: 19.01.1996
(51) Int. Cl.: G01D 5/38

(54) **Längen- oder Winkelmesseinrichtung**
Length- or anglemeasuring device
Dispositif pour mesurer des positions angulaires ou longitudinales

(30) Priorität: 04.03.1995 DE 19507613
(43) Veröffentlichungstag der Anmeldung: 11.09.1996
(73) Patentinhaber: Dr. Johannes Heidenhain GmbH, 83292 Traunreut (DE)
(72) Erfinder: Huber, Walter, Dipl.-Ing., D-83278 Traunstein (DE)

(56) Entgegenhaltungen:
- EP-A- 0 223 009
- DE-A- 4 303 162
- SPIES A: "LAENGEN IN DER ULTRAPRAEZISIONSTECHNIK MESSEN" FEINWERKTECHNIK + MESSTECHNIK, Bd. 98, Nr. 10, 1.Oktober 1990, Seiten 406-410, XP000165960

## Beschreibung

Die Erfindung bezieht sich auf eine Längen- oder Winkelmeßeinrichtung gemäß dem Oberbegriff des Anspruches 1.

Aus der US-A-4,461,083 ist eine Abtasteinrichtung bekannt, bei der die Abtastplatte zwei zueinander phasenverschobene Teil-Abtastfelder zur Richtungserkennung aufweist.

Aus der DE 30 07 311 C2 ist eine Zweigitter-Meßeinrichtung bekannt, bei der die Abtastplatte vier Felder aufweist. Diese vier Felder sind zueinander verschoben und liefern phasenverschobene Abtastsignale.

Außerdem sind Positionsmeßeinrichtungen die mit Phasengittern arbeiten bekannt. Auf Seite 65 der Dissertation an der Technischen Universität Hannover, 1978, "Dreigitterschrittgeber" von J. Willhelm wird die Signalgewinnung aus zwei Abtastfeldern beschrieben, wobei durch zwei entgegensetzt geneigte Keile die Sinus- und Cosinus-Signallichtflüsse getrennt werden.

Des weiteren wird in der EP-0 163 362-B1 eine Positionsmeßeinrichtung beschrieben, bei der vorgeschlagen wird, eine Phasenverschiebung zwischen den am Indexgitter gebeugten Strahlenbündeln dadurch zu erzeugen, daß bei gegebener Gitterkonstante die Breite eines Steges des als Phasengitter ausgebildeten Indexgitters von der Breite einer Furche abweicht, daß also das Steg-Furche-Verhältnis von 1:1 abweicht.

Mit Hilfe der mittels eines solchen Phasengitters gewonnenen - zueinander phasenverschobenen - Teilstrahlenbündeln verschiedener Ordnungen kann Betrag und Richtung der Relativverschiebung zwischen dem Maßstabgitter und dem Indexgitter ermittelt werden.

Die Modulationsgrade der Signale nullter und ± erster Ordnung in Auflicht-Phasengittermeßsystemen mit parallel angeordnetem Index- und Maßstabgitter mit ungleich breiten Stegen bzw. Furchen des Indexgitters sind allerdings unterschiedlich und ändern sich bei Abstandsänderung, Verschmutzung des Gitters etc. ungleich.

Die unterschiedlichen Änderungen der Modulationsgrade führen zu Symmetriefehlern der elektronisch verschalteten nullsymmetrischen Signale und damit zu Meßfehlern.

In der EP-O 223 009-B1 ist eine weitere Längenöder Winkelmeßeinrichtung beschrieben.

Bei dieser Positionsmeßeinrichtung nach dem Dreigitter-Abtastprinzip weist das Abtastgitter zwei in Meßrichtung um 1/4 der Gitterkonstante zueinander versetzte, als Phasengitter ausgebildete Abtastfelder auf. Die Phasengitter der Abtastfelder haben ein von 1:1 abweichendes Steg-/Furchenbreitenverhältnis. Durch optisch gegensinnig ablenkende Prismen oder dergleichen, die den zwei Abtastfeldern zugeordnet sind, lassen sich die aus den zwei Abtastfeldern erzeugten, gegenphasigen Signalstrahlenbündel ± 1. resultierender Beugungsordnung mit räumlich getrennt angeordneten Detektoren erfassen.

Durch elektronische Gegentaktbildung der Signale aus den zwei Abtastfeldern lassen sich die zur Richtungserkennung notwendigen um 90° phasenversetzten, nullsymmetrischen Ausgangssignale erzeugen.

Gemäß dieser wie auch der zuvor zitierten Patentschrift werden an die Fertigung der Abtastgitter hohe Anforderungen gestellt, denn sowohl die Phasenbeziehungen zwischen den Signalstrahlenbündeln 0. und ± 1. resultierender Beugungsordnungen als auch die Modulationsgrade der Signalstrahlenbündel ± 1. resultierender Ordnung hängen kritisch von den Strukturparametern der Phasenstrukturen des Abtastgitters ab.

Der Erfindung liegt die Aufgabe zugrunde, die Schwierigkeiten oben genannter Abhängigkeiten mit einer Positionsmeßeinrichtung zu umgehen, bei der die Gitterherstellung wesentlich einfacher ist und Abstandsänderungen zwischen Maßstab und Abtastgitter nicht zu Meßfehlern führen.

Diese Aufgabe wird durch eine Vorrichtung mit den Merkmalen des Anspruches 1 gelöst.

Mit dieser Vorrichtung werden wenigstens drei phasenverschobene Ausgangssignale erzeugt, die bezüglich Signalgröße wie auch Modulationsgrad identisch sind. Die Modulationsgrade liegen dabei nahe 1, nahezu unabhängig von den Strukturparametern der Gitter.

Mit den Merkmalen der abhängigen Ansprüche wird die Erfindung noch weiter ausgestaltet.

Die Vorteile der erfindungsgemäßen Meßvorrichtung liegen in der unproblematischen Gitterherstellung, da an die Einhaltung von Strukturparametern der Gitter keine hohen Anforderungen gestellt zu werden brauchen.

Anhand der Zeichnungen wird die Erfindung mittels Ausführungsbeispielen noch näher erläutert.

Es zeigt
- Figur 1a: ein Optik-Schema einer tionsmeßeinrichtung;
- Figur 1b: ein Strahlengangschema;
- Figur 2: eine Vorderansicht der Abtastplatte aus Figur 1;
- Figur 3: eine Rückansicht der Abtastplatte aus Figur 1;
- Figur 4: eine variierte Vorderansicht einer Abtastplatte;
- Figur 5: eine variierte Rückansicht einer Abtastplatte;
- Figur 6: eine Detektorfeldanordnung, zu der Abtastplatte gemäß der Figuren 4 und 5;
- Figur 7: eine weitere Ansicht einer Abtastplatte;
- Figur 8: eine Darstellung der Detektorgeometrie für in Figur 7 gezeigte Abtastplatte und
- Figur 9: einen Querschnitt durch die Abtastplatte gemäß Figur 7.

In Figur la ist stark vereinfacht das Optik-Schema einer Positionsmeßeinrichtung dargestellt, die nach dem inferentiellen Meßprinzip arbeitet. Die Meßrichtung X verläuft senkrecht zur Zeichenebene und ist durch einen Kreis mit einem zentralen Punkt im Koordinatendiagramm rechts oben in Figur la gekennzeichnet.

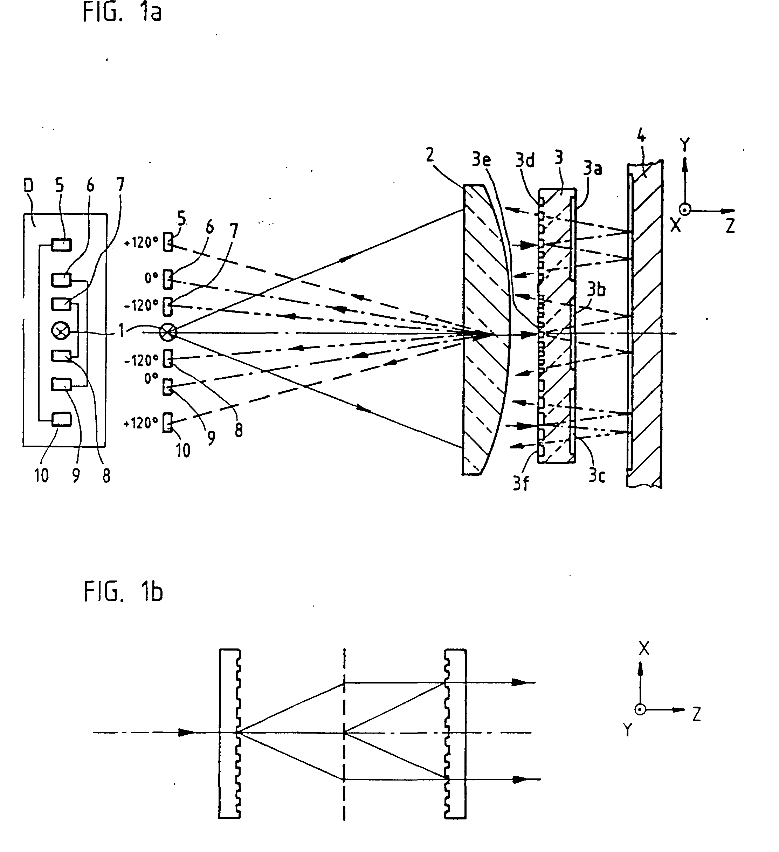

Das Licht einer Lichtquelle 1 wird von einem Kondensor 2 in bekannter Weise auf ein Indexgitter 3 gerichtet und durchtritt dieses. Am Indexgitter 3 werden in Figur la nicht dargestellte, in X-Richtung gebeugte Teilstrahlenbündel erzeugt, die auf ein Maßstabgitter 4 auftreffen, unter Reflexion erneut gebeugt und wieder auf das Indexgitter 3 gerichtet werden, und dort zur Interferenz kommen. Da diese Vorgänge auch beim Stand der Technik ablaufen, sollen sie nur schematisch in Figur 1b dargestellt werden. Die kurz beschriebenen Beugungen der Teilstrahlenbündel führen nach dem Austritt aus dem letzten Gitter zu Signalstrahlenbündeln resultierender 0. Beugungsordnung, die parallel zur Gitternormalen verlaufen.

Wesentlich gemäß Figur la ist jedoch, daß das Indexgitter 3 verschiedene Teilfelder 3a, 3b, 3c aufweist, die zueinander in Meßrichtung X versetzt sind. Von den durch die Teilfelder 3a, 3b, 3c zur Interferenz gebrachten Teilstrahlenbündel werden nur die Signalstrahlenbündel resultierender 0. Beugungsordnung zur Signalbildung herangezogen.

Diese Signalstrahlenbündel resultierender 0. Beugungsordnung verlaufen in Ebenen, die parallel zur Zeichnungsebene liegen.

Im Ausführungsbeispiel nach Figur 1 sind die drei Teilfelder 3a, 3b, 3c in Y-Richtung separiert angeordnet, um die aus diesem Teilfeldern erzeugten Signalstrahlenbündel mittels Ablenkgittern 3d, 3e, 3f unterschiedlicher Gitterkonstante GK auf die ihnen zugeordneten Detektoren 5, 6, 7, 8, 9, 10 zu lenken.

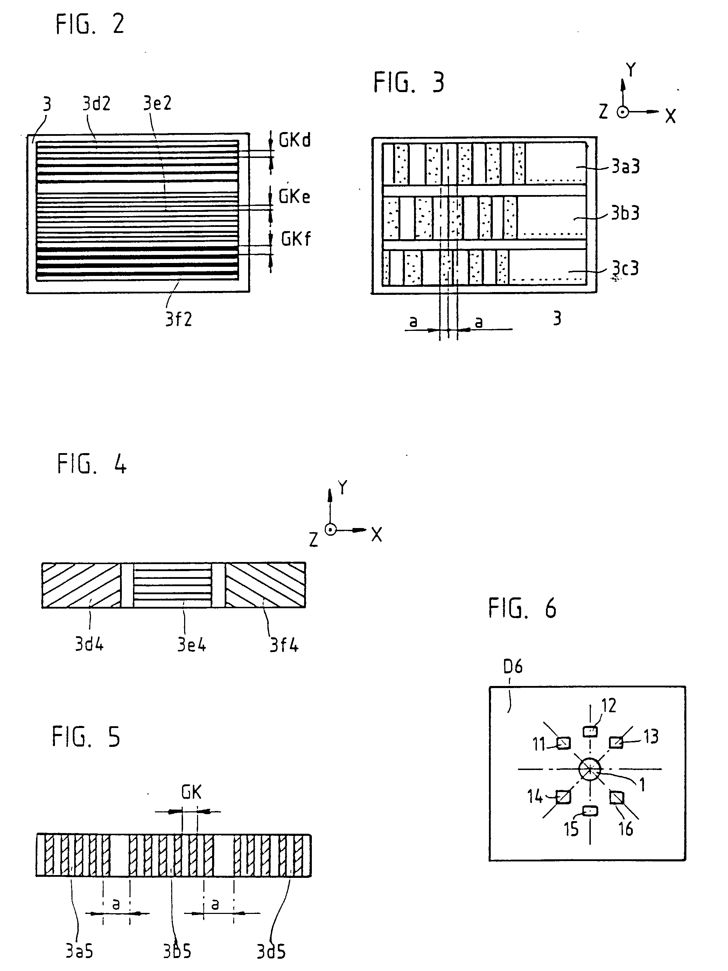

Als Alternative zeigt Figur 5, daß die Teilfelder 3a5, 3b5 und 3c5 in X-Richtung separiert angeordnet sind. Für die Erfindung ist von Belang, daß die Teilfelder 3a, 3b, 3c um einen Bruchteil plus einem beliebigen ganzzahligen Vielfachen der halben Teilungsperiode (= Gitterkonstante GK) in Meßrichtung X zueinander versetzt sind.

Dieser Versatz a (a = (N ± 1/3) GK/2 ; N = 0, 1, 2, 3... für drei um jeweils 120° zueinander phasenverschobene Signalstrahlenbündel) bewirkt eine Verschiebung der Phasenlagen der Signalstrahlenbündel der resultierenden 0. Beugungsordnungen zueinander. Das bedeutet, daß ein durch das Teilfeld 3a, 3a3, 3a5 erzeugtes Signalstrahlenbündel resultierender 0. Beugungsordnung zu den durch die Teilfelder 3b, 3b3, 3b5 bzw. 3c, 3c3, 3c5 jeweils erzeugten Signalstrahlenbündel resultierender 0. Beugungsordnung eine bestimmte Phasenverschiebung aufweist, wobei diese Phasenverschiebung durch den gegenseitigen Versatz a der Teilfelder 3a, 3b, 3c bzw. 3a3, 3b3, 3c3 bzw. 3a5, 3b5, 3c5 zueinander bestimmt ist.

Die Phasenlagen aller Signalstrahlenbündel sind somit - im Gegensatz zum Stand der Technik - ausschließlich durch einen geometrischen Versatz der erwähnten Teilfelder bestimmt, weswegen die Phasenbeziehungen zwischen den Signalstrahlenbündeln auch nicht von den Strukturparametern der Gitter abhängen.

Um diese Phasenverschiebung der Signalstrahlenbündel resultierender 0. Beugungsordnungen meßtechnisch zur Bildung von Positions-Meßsignalen nutzen zu können, werden sie gemäß Figur la auf Detektoren 5, 6, 7, 8, 9, 10 gelenkt, von denen Ausgangssignale erzeugt werden, die die Relativbewegung der beiden Objekte, deren Lage zueinander gemessen werden soll, repräsentieren.

Um die Signalstrahlenbündel auf die ihnen zugeordneten Detektoren 5 bis 10 zu lenken, sind richtungsselektierende Mittel vorgesehen, die den Teilfeldern 3a, 3b, 3c; 3a3, 3b3, 3c3; 3a5, 3b5, 3c5 jeweils zugeordnet sind.

Diese richtungsselektierenden Mittel können diffraktive optische Elemente, refraktive optische Elemente, holographisch optische Elemente etc. sein.

In Figur la sind sie mit 3d, 3e, 3f bezeichnet. In Figur 2 sind sie als Vorderansicht der Abtastplatte 3 dargestellt und mit 3d2, 3e2, 3f2 bezeichnet. Die Beugungsgitter 3d2, 3e2, 3f2 sind den Teilfeldern 3a3, 3b3, 3c3 zugeordnet, so, wie die Beugungsgitter 3d, 3e, 3f den Feldern 3a, 3b, 3c der Abtastplatte 3 (= Indexgitter) zugeordnet sind. Die richtungsselektierenden Mittel weisen - falls sie als Beugungsgitter 3d, 3e, 3f; 3d2, 3e2, 3f2 ausgebildet sind - unterschiedliche Gitterparameter auf. Durch die unterschiedlichen Gitterparameter - üblicherweise unterschiedliche Gitterkonstanten GK - werden die Signalstrahlenbündel resultierender 0. Ordnung in unterschiedliche Richtungen gebeugt und auf verschiedene Detektoren 5 bis 10 gelenkt.

In Figur 4 ist eine Gitter-Zeile dargestellt, die richtungsselektierende Beugungsgitter 3d4, 3e4, 3f4 zeigt. Diese Beugungsgitter 3d4, 3e4, 3f4 sind in ihrer Orientierung unterschiedlich, können darüber hinaus aber auch unterschiedliche Gitterkonstanten aufweisen.

Figur 5 zeigt eine Gitter-Zeile, die bereits erwähnt wurde und in der drei Beugungsgitter als Teilfelder 3a5, 3b5, 3c5 eines Indexgitters dargestellt sind. Sie sind zueinander um einen Versatz a (a = (N ± 1/3) GK/2; N = 0, 1, 2, 3...) zueinander verschoben und erzeugen zusammen mit dem Maßstabgitter in der vorerwähnten Weise zueinander phasenverschobene Signalstrahlenbündel resultierender 0. Beugungsordnung. Diese Signalstrahlenbündel resultierender 0. Beugungsordnung werden von den Teilfeldern 3d4, 3e4, 3f4 in verschiedene Richtungen abgelenkt und auf Detektoren 11, 12, 13, 14, 15, 16 geleitet, die auf einer Detektorplatine D6 angeordnet sind. Ihre geometrische Anordnung richtet sich nach der gegenseitigen Orientierung der ihnen zugeordneten, richtungsselektierenden Beugungsgitter 3d4, 3e4, 3f4.

Die Gitter-Zeilen in Figur 4 und 5 sowie die Detektorplatine D6 aus Figur 6 sind in einem Optik-Schema angeordnet, das dem aus Figur 1 ähnlich ist.

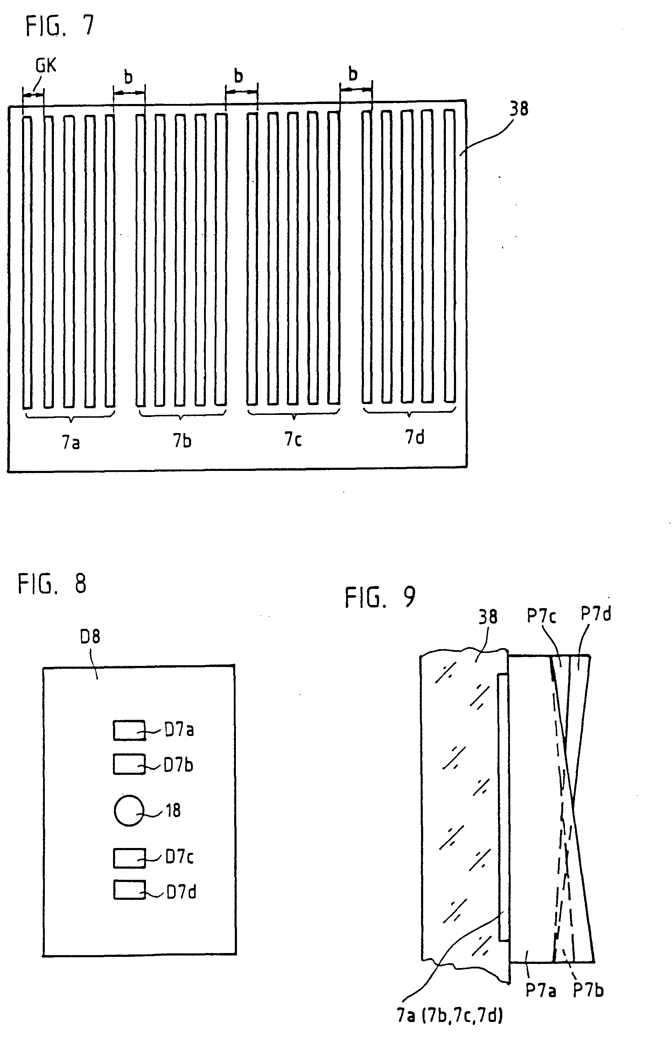

In Figur 7 ist ein Ausschnitt eines Indexgitters 38 gezeigt, auf dem vier Teilfelder 7a, 7b, 7c, 7d zur Erzeugung von phasenverschobenen Signalstrahlenbündeln resultierender 0. Beugungsordnung angeordnet sind. Die Signalstrahlenbündel resultierender 0. Beugungsordnung treten senkrecht zur Zeichnungsebene aus ihr heraus oder in sie hinein.

Die vier Felder 7a, 7b, 7c, 7d weisen die Gitterkonstante GK auf. Die Felder 7a, 7b, 7c, 7d weisen gegeneinander jeweils den Versatz b (b = (N ± 1/4) GK/2; N = 0, 1, 2, 3... für vier um jeweils 90° zueinander phasenverschobene Signalstrahlenbündel) auf, wodurch die durch sie erzeugten Signalstrahlenbündel gegeneinander um jeweils 90° in der Phase verschoben sind. Bei vier Feldern 7a, 7b, 7c, 7d lassen sich bevorzugt vier um 90° zueinander phasenverschobene Signale erzeugen, wenn die Strahlenbündel durch richtungsselektierende Mittel auf ihnen zugeordnete Detektoren D7a, D7b, D7c, D7d gelenkt werden, deren geometrische Anordnung auf einer Platine D8 gemäß Figur 8 gezeigt ist. Die Richtungsselektierung wird in diesem Ausführungsbeispiel durch Prismen-Keile P7a, P7b, P7c, P7d erzielt, die den Teilfeldern 7a, 7b, 7c, 7d auf dem Indexgitter 38 zugeordnet sind, wie aus Figur 9 ersichtlich ist.

Die Darstellungen in den Figuren sind nicht maßstäblich und sollen nur der Erläuterung der prinzipiellen Zusammenhänge dienen.

## Patentansprüche

1. Vorrichtung zum Messen der Relativverschiebung zwischen zwei Objekten mit einem auf einem Objekt anbringbaren periodischen Gitter (4), wenigstens einem auf dem anderen Objekt anordbaren weiteren periodischen Gitter (3,38), einer Lichtquelle (1) zum Beleuchten der Gitter, so daß an dem einen Gitter (3,38) in Meßrichtung X gebeugte Teilstrahlenbündel erzeugt werden, die auf das andere Gitter (4) auftreffen, unter Reflexion erneut gebeugt und wieder auf das erste Gitter (3,38) gerichtet werden und dort zur Interferenz kommen, und mit wenigstens drei Detektoren (5,6,7,8,9,10;11,12,13,14,15,16; D7a,D7b,D7c,D7d) zum Detektieren von Signalstrahlenbündeln und Erzeugen entsprechender für die Relativbewegung zwischen den beiden Objekten repräsentativer Ausgangssignale, dadurch gekennzeichnet, daß eines der Gitter (3, 38) wenigstens drei Teilbereiche (3a, 3b, 3c; 3a3, 3b3, 3c3; 3a5, 3b5, 3c5; 7a, 7b, 7c, 7d) aufweist, die in Meßrichtung (X) geometrisch zueinander versetzt sind und durch die zueinander phasenverschobene Signalstrahlenbündel gebildet werden, wobei nur Signalstrahlenbündel resultierender 0. Beugungsordnung zur Signalbildung herangezogen werden, und daß den Teilbereichen (3a, 3b, 3c; 3a3, 3b3, 3c3; 3a5, 3b5, 3c5; 7a, 7b, 7c, 7d) richtungsselektierende Mittel (3d, 3e, 3f; 3d2, 3e2, 3f2; 3d4, 3e4, 3f4; P7a, P7b, P7c, P7d) zugeordnet sind, die diese Signalstrahlenbündel resultierender 0. Beugungsordnung auf die ihnen zugeordneten Detektoren (5, 6, 7, 8, 9, 10; 11, 12, 13, 14, 15, 16; D7a, D7b, D7c, D7d) lenken.

2. Vorrichtung nach Anspruch 1, dadurch gekennzeichnet, daß die Gitter (4, 3) Maßstab- und Abtastgitter darstellen, und daß die Teilbereiche (3a, 3b, 3c; 3a3, 3b3, 3c3; 3a5, 3b5, 3c5; 7a, 7b, 7c, 7d) in Meßrichtung (X) einen gegenseitigen Versatz von (N ± 1/AT)GK/2 aufweisen, wobei AT die Anzahl der Teilbereiche bedeutet, GK die Gitterkonstante bedeutet und N gleich null oder eine positive ganze Zahl ist.

3. Vorrichtung nach Anspruch 2, dadurch gekennzeichnet, daß die zueinander versetzten Teilbereiche (3a, 3b, 3c; 3a3, 3b3, 3c3; 3a5, 3b5, 3c5; 7a, 7b, 7c, 7d) Bestandteile des Abtastgitters (3, 38) sind.

4. Vorrichtung nach Anspruch 1, dadurch gekennzeichnet, daß die Gitter (3, 4) gleiche Gitterkonstanten (GK) aufweisen.

5. Vorrichtung nach Anspruch 1, dadurch gekennzeichnet, daß die Gitter ungleiche Gitterkonstanten (GK) aufweisen.

6. Vorrichtung nach Anspruch 5, dadurch gekennzeichnet, daß eines der Gitter die halbe Gitterkonstante des anderen Gitters aufweist.

7. Vorrichtung nach Anspruch 2, dadurch gekennzeichnet, daß eines der Gitter (3) drei Teilbereiche (3a3, 3b3, 3c3) aufweist, die zueinander in Meßrichtung (X) einen gegenseitigen Versatz von (N/2 ± 1/6)GK aufweisen.

8. Vorrichtung nach Anspruch 2, dadurch gekenn-. zeichnet, daß eines der Gitter (38) vier Teilbereiche (7a, 7b, 7c, 7d) aufweist, die zueinander in Meßrichtung (X) einen gegenseitigen Versatz von (N/2 ± 1/8)GK aufweisen.

9. Vorrichtung nach Anspruch 1, dadurch gekennzeichnet,'daß die richtungsselektierenden Mittel Beugungsgitter (3d, 3e, 3f; 3d2, 3e2, 3f2; 3d4, 3e4, 3f4) sind.

10. Vorrichtung nach Anspruch 9, dadurch gekennzeichnet, daß die Beugungsgitter (3d, 3e, 3f; 3d2, 3e2, 3f2) untereinander unterschiedliche Gitterkonstanten (GKd, GKe, GKf) aufweisen.

11. Vorrichtung nach Anspruch 9, dadurch gekennzeichnet, daß die Beugungsgitter (3d4, 3e4, 3f4) unterschiedliche Orientierung aufweisen.

12. Vorrichtung nach Anspruch 1, dadurch gekennzeichnet, daß die richtungsselektierenden Mittel Prismen-Keile (P7a, P7b, P7c, P7d) unterschiedlicher Neigung sind.

## Claims

1. Device for measuring the relative displacement between two objects and having a periodic grating (4) which may be attached to an object, at least one further periodic grating (3, 38) which may be arranged on the other object, a light source (1) for illuminating the grating, such that on the one grating (3, 38) partial ray beams are generated which are diffracted in the measurement direction X and which impinge on the other grating (4), are diffracted again under reflection and directed to the first grating (3, 38) again and come to interference there, and said device having at least three detectors (5, 6, 7, 8, 9, 10; 11, 12, 13, 14, 15, 16; D7a, D7b, D7c, D7d) for detecting signal beams and generating corresponding output signals representative of the relative movement between the two objects, **characterised in that** one of the gratings (3, 38) has at least three partial regions (3a, 3b, 3c; 3a3, 3b3, 3c3; 3a5, 3b5, 3c5; 7a, 7b, 7c, 7d) which are geometrically offset relative to one another in measurement direction (X) and are formed by the signal beams which are phase-shifted in respect of one another, only signal beams of the resulting zero order of diffraction being used for forming the signal, and in that there are allocated to the partial regions (3a, 3b, 3c; 3a3, 3b3, 3c3; 3a5, 3b5, 3c5; 7a, 7b, 7c, 7d) direction-selecting means (3d, 3e, 3f; 3d2, 3e2, 3f2; 3d4, 3e4, 3f4; P7a, P7b, P7c, P7d) which guide these signal beams of the resulting zero order of diffraction to their associated detectors (5, 6, 7, 8, 9, 10; 11, 12, 13, 14, 15, 16; D7a, D7b, D7c, D7d).

2. Device according to claim 1, **characterised in that** the gratings (4, 3) represent scale and scanning gratings, and in that the partial regions (3a, 3b, 3c; 3a3, 3b3, 3c3; 3a5, 3b5, 3c5; 7a, 7b, 7c, 7d) have a mutual offset of (N ± 1/AT)GK/2 in the measurement direction (X), wherein AT means the number of partial regions, GK means the grating constant and N equals zero or a positive whole number.

3. Device according to claim 2, **characterised in that** the partial regions (3a, 3b, 3c; 3a3, 3b3, 3c3; 3a5, 3b5, 3c5; 7a, 7b, 7c, 7d), which are offset relative to one another, are components of the scanning grating (3, 38).

4. Device according to claim 1, **characterised in that** the gratings (3, 4) have equal grating constants (GK) .

5. Device according to claim 1, **characterised in that** the gratings do not have equal grating constants (GK).

6. Device according to claim 5, **characterised in that** one of the gratings has half the grating constant of the other grating.

7. Device according to claim 2, **characterised in that** one of the gratings (3) has three partial regions (3a3, 3b3, 3c3) which have a mutual offset of (N/2 ± 1/6)GK relative to one another in the measurement direction (X).

8. Device according to claim 2, **characterised in that** one of the gratings (38) has four partial regions (7a, 7b, 7c, 7d) which have a mutual offset of (N/2 ± 1/8)GK relative to one another in the measurement direction (X) .

9. Device according to claim 1, **characterised in that** the direction-selecting means are diffraction gratings (3d, 3e, 3f; 3d2, 3e2, 3f2; 3d4, 3e4, 3f4).

10. Device according to claim 9, **characterised in that** the diffraction gratings (3d, 3e, 3f; 3d2, 3e2, 3f2)have different grating constants (GKd, GKe, GKf) from one another.

11. Device according to claim 9, **characterised in that** the diffraction gratings (3d4, 3e4, 3f4) have differing orientation.

12. Device according to claim 1, **characterised in that** the direction-selecting means are prism wedges (P7a, P7b, P7c, P7d) of differing inclination.

## Revendications

1. Dispositif pour la mesure du déplacement relatif entre deux objets comprenant un réseau périodique (4) disposé sur un objet, au moins un réseau périodique (3, 38) supplémentaire disposé sur l'autre objet, une source de lumière (1) pour éclairer les réseaux de manière à produire sur l'un des réseaux (3, 38) des faisceaux secondaires de rayons, diffractés dans la direction de mesure (X), qui arrivent sur l'autre réseau (4), par réflexion subissent une nouvelle diffraction, sont renvoyés sur le premier réseau (3, 38) et sont amenés en interférence, ainsi qu'au moins trois détecteurs (5, 6, 7, 8, 9,3 10; 11, 12, 13, 14, 15, 16; D7a, D7b, D7c, D7d) pour détecter des faisceaux de rayons de signal et produire des signaux de sortie correspondants, représentatifs du déplacement relatif entre les deux objets, caractérisé en ce que l'un des réseaux (3, 38) comporte au moins trois zones élémentaires (3a, 3b, 3c; 3a3, 3b3, 3c3; 3a5, 3b5, 3c5; 7a, 7b, 7c, 7d) qui sont mutuellement décalées géométriquement dans la direction de mesure (X) et par lesquelles les faisceaux de rayons de signal mutuellement déphasés sont produits, seulement un faisceau de rayons de signal d'ordre de diffraction résultant 0 étant utilisé pour former le signal, en ce que des moyens (3d, 3e, 3f; 3d2, 3e2, 3f2; 3d4, 3e4, 3f4; P7a, P7b, P7c, P7d) sélectifs en direction sont associés aux zones élémentaires (3a, 3b, 3c; 3a3, 3b3, 3c3; 3a5, 3b5, 3c5; 7a, 7b, 7c, 7d) et dirigent les faisceaux de rayons de signal d'ordre de diffraction résultant 0 sur les détecteurs qui leur sont associés (5, 6, 7, 8, 9,3 10; 11, 12, 13, 14, 15, 16; D7a, D7b, D7c, D7d).

2. Dispositif selon la revendication 1, caractérisé en ce que les réseaux (4, 3) sont des réseaux de règle et des réseaux de palpage et en ce que les zones élémentaires (3a, 3b, 3c; 3a3, 3b3, 3c3; 3a5, 3b5, 3c5; 7a, 7b, 7c, 7d), dans la direction de mesure (X), présentent un décalage mutuel de (N± 1/AT)GK/2, AT représentant le nombre des zones élémentaires, GK représentant la constante de réseau et N étant égal à zéro ou étant un nombre entier positif.

3. Dispositif selon la revendication 2, caractérisé en ce que les zones élémentaires mutuellement décalées zones élémentaires (3a, 3b, 3c; 3a3, 3b3, 3c3; 3a5, 3b5, 3c5; 7a, 7b, 7c, 7d)font partie du réseau de palpage (3, 38).

4. Dispositif selon la revendication 1, caractérisé en ce que les réseaux (3, 4) ont des constantes de réseau (GK) identiques.

5. Dispositif selon la revendication 1, caractérisé en ce que les réseaux ont des constantes de réseau (GK) différentes.

6. Dispositif selon la revendication 5, caractérisé en ce que l'un des réseaux a une constante de réseau égale à la moitié de la constante de réseau de l'autre réseau.

7. Dispositif selon la revendication 2, caractérisé en ce que l'un des réseaux (3) comporte trois zones élémentaires (3a3, 3b3, 3c3) qui présentent un décalage mutuel de (N/2 ± 1/6) GK dans la direction de mesure (X).

8. Dispositif selon la revendication 2, caractérisé en ce que l'un des réseaux (38) comporte quatre zones élémentaires (7a, 7b, 7c, 7d) qui présentent un décalage mutuel de (N/2 ± 1/8) GK dans la direction de mesure (X).

9. Dispositif selon la revendication 1, caractérisé en ce que les moyens sélectifs en direction sont des réseaux de diffraction (3d, 3e, 3f; 3d2, 3e2, 3f2; 3d4, 3e4, 3f4).

10. Dispositif selon la revendication 9, caractérisé en ce que les réseaux de diffraction (3d, 3e, 3f; 3d2, 3e2, 3f2) ont des constantes de réseau (GKd, GKe, GKf) mutuellement différentes.

11. Dispositif selon la revendication, caractérisé en ce que les réseaux de diffraction (3d4, 3e4, 3f4) ont des orientations différentes.

12. Dispositif selon la revendication 1, caractérisé en ce que les moyens sélectifs en direction sont des prismes-coins (P7a, P7b, P7c, P7d) avec des pentes différentes.
